# EUROPEAN PATENT APPLICATION

(11) **EP 0 912 070 A1**
(43) Date of publication of application: **28.04.1999**
(21) Application number: 98203580.0
(22) Date of filing: 23.10.1998
(51) Int. Cl.: H04Q 3/47

(54) **Network system for routing calls**

(30) Priority: 23.10.1997 NL 1007335
(71) Applicant: Koninklijke KPN N.V., 9726 AE Groningen (NL)
(72) Inventor: Los, Dirk, 2316 XV Leiden (NL); Van der Bijl, Jan Peter, 8925 CL Leeuwarden (NL)
(74) Representative: Klein, Bart

(57) **Abstract**

Network to which, via nodes (N1...N5), work stations (T1...T5) are connected. The network server comprises a routing table. The routing information can be adjusted by network users (U1...U3). According to the routing table, calls for U1 will be routed to node N3, by which user U1 is attainable via terminal T3. Likewise, calls for U2 arrive at terminal T1, where U2 has chosen residence and calls for U3 at terminal T5. Rerouting of calls, not directed to a user, but to a terminal ("anonymous user"), takes place in the same way and with the same routing table. U1 for example, can pass on that all calls to T3 have to be routed to T2, or rather to node N2. U1 continues to receive calls that are addressed to itself at T3. By using the same database and control for both routing of a call directed to a user as for routing a call directed to a terminal, no system conflicts arise.

## Description

### BACKGROUND OF THE INVENTION

The invention is related to a network system, provided with means for the rerouting of calls.

Currently, two rerouting mechanisms exist, viz. rerouting from terminal to terminal (TTR: Terminal to Terminal Routing) and rerouting from subscriber to terminal (UTR: User to Terminal Routing). TTR comprises services like the secretary function, "follow-me", etc.; UTR comprises UPT related services (UPT: Universal Personal Telecommunications).

Up to now different servers are used for TTR and UTR, of which the heart is formed by a database in which the terminal or user called is linked to an (other) terminal. The use of different servers or platforms can lead to system conflicts in case the same user wants to use both services simultaneously. The system conflicts can only be avoided by making the control of the TTR of UTR system more complex.

### SUMMARY OF THE INVENTION

The invention is aimed at providing a solution to the presented problem by transforming TTR actions if it were into UTR actions, whereby use can be made of one and the same control system, viz. the UTR control. For UTR this gives no change; for executing TTR functions the term "anonymous user" is introduced. Herewith, each terminal is continually presented as an (anonymous) user or, in other words, terminals unto which has to be rerouted, are designated with an (anonymous) user designation. That designation may otherwise have the format of terminal designations: the anonymous user designation is then made equal to the terminal designation.

In the following, this is explained in more detail by means of an exemplary embodiment.

### EXEMPLARY EMBODIMENT

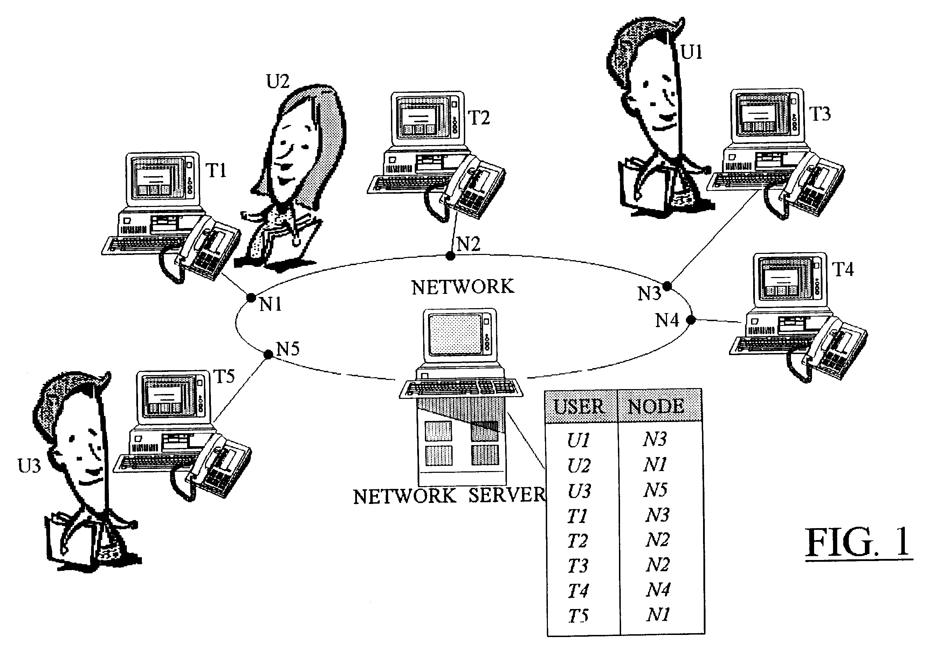

Figure 1 shows an exemplary embodiment of the invention. The figure shows a network, controlled by a network server, to which via a number of nodes N1...N5 and [sic] a number of workstations T1...T5 are connected.

The network server comprises a routing table. The routing information can be adjusted and modified by the network users, in the figure the users U1...U3. In accordance with the routing table, the network server will rout calls for U1 to node N3, by which user U1, who has chosen residence on the terminal T3 which is connected to node N3, is reached. In the same, way calls for U2 arrive at the terminal where U2 has chosen residence, and the calls for U3 at terminal T5, where the latter is attainable. Said users U1...U3 have earlier informed the server where the are attainable by, e.g. via the terminal where the chose residence, entering their personal ID. The network server then registers their user ID ("U#") and the node ID ("N#") via which that registration arrives at the network server, by which in the figure the first three lines of the routing table are formed. If user U1, at a certain moment, rather wants to be attainable via terminal T4, he can pass that on via terminal T3 or T4, causing "U1 N3" in the table to be changed into "U1 N4". Also rerouting of terminals, no matter who is the user ("anonymous user"), can be carried out in the same way and with the same means, in this case with the same routing table. U1 can e.g. report that all calls to T3 have to be rerouted to T2, or rather, to node N2. U1 continues to receive calls that are addressed to it, U1, on T3 as usual.

By, contrary to the "state of the art", using the same database and control for UTR and for TTR, no system conflicts arise. An anonymous user can rerout one of the terminals T1...T5: in the table it can be seen that terminal T1 has been rerouted to node N3, causing all calls destined for T1, i.e. for each anonymous user in the proximity of T1, to arrive at T3. T2 and T4 have not been rerouted, while T3 and T5 have been rerouted to T2, via N2, and T1, via N1, respectively.

## Claims

1. Network system, provided with means for rerouting calls, **characterised in that** all rerouting information, both as relating to the routing of calls to a certain user (U1...U3), as relating to the routing of calls to a certain terminal (T1...T5), are stored in one and the same routing table.
